# FASCICULE DE BREVET EUROPEEN

(11) **EP 3 071 012 B1**
(45) Date de publication et mention de la délivrance du brevet: **23.08.2017**
(21) Numéro de dépôt: 14798915.6
(22) Date de dépôt: 16.10.2014
(51) Int. Cl.: A01D 46/26, A01D 51/00

(54) **PROCÉDÉ ET DISPOSITIF DE DÉPLOIEMENT ET DE RETRAIT D'UNE BÂCHE DE COLLECTE DE PETITS FRUITS, ET MACHINES DE RÉCOLTE EN FAISANT APPLICATION**
VERFAHREN UND VORRICHTUNG ZUM AUSFAHREN UND EINZIEHEN EINER PLANE ZUM SAMMELN VON KLEINEN FRÜCHTEN UND ERNTEMASCHINEN
METHOD AND DEVICE FOR DEPLOYING AND RETRACTING A TARPAULIN FOR COLLECTING SMALL FRUIT, AND HARVESTING MACHINES USING SAME

(30) Priorité: 20.11.2013 FR 1361396
(43) Date de publication de la demande: 28.09.2016
(73) Titulaire: PELLENC (Société Anonyme), 84120 Pertuis (FR)
(72) Inventeur: PELLENC, Roger, F-84120 Pertuis (FR)
(74) Mandataire: Weber, Etienne Nicolas
(86) Numéro de dépôt international: PCT/FR2014/052635
(87) Numéro de publication internationale: WO 2015/075337

(56) Documents cités:
- EP-A1- 0 133 334
- FR-A1- 2 556 924
- FR-A1- 2 597 704
- FR-A1- 2 946 832

## Description

L'innovation se situe dans le domaine de la récolte de petits fruits tels que, par exemple, olives, amandes, noix, noisettes, châtaignes, cerises, mirabelles, prunes, cerises du caféier, etc... Plus précisément, elle concerne le domaine de la collecte des petits fruits qui sont détachés des arbres ou arbustes fruitiers au moyen d'appareils portables (peignes) ou de secoueurs mécanisés, ou de matériels automatisés, et réceptionnés sur une bâche disposée en-dessous des branches fruitières desdits arbres ou arbustes et au-dessus du sol, afin qu'ils soient ensuite rassemblés et collectés en utilisant l'action d'enroulement de ladite bâche.

La présente invention concerne ainsi un dispositif permettant d'étendre automatiquement une bâche en dessous des branches fruitières puis d'accompagner son retrait pour en collecter les fruits détachés de l'arbre et tombés sur ladite bâche. Elle vise aussi le procédé de déroulement et de ré-enroulement d'une telle bâche. D'autre part, elle s'applique aux machines automotrices ou tractées équipées de tels dispositifs.

Il est connu depuis longtemps de disposer manuellement au sol des bâches ou filets en dessous des arbres fruitiers à récolter, de faire tomber les petits fruits sur lesdites bâches, par exemple au moyen de secoueurs ou de vibrations appliquées par des appareils portables ou par des vibreurs portés par des véhicules tracteurs ou automoteurs, pour ensuite récolter les petits fruits détachés de l'arbre en les rassemblant lors de l'enroulement de la bâche. La mise en place de la bâche et son retrait nécessitent toutefois la présence d'un minimum de deux opérateurs et un temps important de mise en place et de retrait de cette dernière sous l'arbre. Cette opération manuelle ne peut en outre s'opérer de nuit, les manipulations et l'environnement présentant des obstacles dangereux pour les opérateurs dans l'obscurité.

Dans le document FR-A-2.597.704, est décrite une machine de récolte de fruits comprenant une installation de réception des fruits détachés des arbres, exécutée en deux parties équipées, chacune, d'un réceptacle muni, latéralement, d'une bâche souple déroulable, et susceptible d'être reliées, de manière articulée, dans le prolongement l'une de l'autre, la partie avant de ladite installation étant agencée de façon à pouvoir être installée sur le côté d'un tracteur agricole, tandis que la partie arrière est agencée de manière à pouvoir être attelée de manière articulée, à un élément du châssis de ladite partie avant. Le bord distal des bâches est muni de poignées permettant de les dérouler et de les déployer manuellement au-dessous de l'arbre à récolter.

Cette machine, qui nécessite deux systèmes d'attelage particuliers et deux dispositifs enrouleurs de bâche motorisés est plutôt complexe et coûteuse ; elle est relativement encombrante ; elle nécessite des interventions manuelles pour le déroulement et le positionnement des bâches et plusieurs opérateurs malgré la présence desquels la récolte ne peut s'effectuer qu'à un rythme lent, incompatible avec les travaux de récolte dans des oliveraies ou des vergers de grande étendue.

Le document FR-2.556.924 décrit un appareil de manoeuvre et de déplacement de bâches pour la récolte des fruits, ayant pour but de pallier les inconvénients du système divulgué dans le document précédent. Il s'agit d'une remorque tirée par un engin tracteur sur laquelle est enroulée une bâche de récolte des fruits, ladite bâche étant déployée de manière automatique sous les arbres. Pour éviter les inconvénients d'un enroulement/déroulement manuel de cette bâche, il est proposé d'effectuer les opérations de déroulement de la bâche en la tractant au moyen de chariots moteurs à roues motrices, chaque chariot étant équipé d'un moteur hydraulique, le tout étant commandé à partir de l'engin tracteur par une seule personne.

Ces chariots sont toutefois encombrants, relativement lents à se déplacer lors des phases de déroulement et d'enroulement de la bâche et nécessitent une plate-forme mécanique complexe pour les convoyer sur la remorque lorsque cette dernière est déplacée entre deux arbres ou sur la route.

De plus, leur commande et leur synchronisation nécessitent l'enroulement et le déroulement de flexibles hydrauliques de commande de leur moteur qui sont ainsi soumis à des agressions par frottement au sol lorsque la bâche est déroulée ou enroulée, réduisant leur durée de vie dans ces conditions opératoires. Il est par ailleurs fréquent que des machines assurent le détachement des fruits mécaniquement, consistant en des engins automoteurs qui peuvent au besoin rouler sur la surface de la bâche et endommager ainsi les flexibles hydrauliques de commande des chariots. L'éclatement d'un ou plusieurs de ces flexibles, outre le fait qu'il bloque l'utilisation ultérieure de la bâche est néfaste pour l'environnement du fait de l'épandage du fluide hydraulique sous pression.

Enfin, ce système fonctionne bien sur un terrain plat et régulier, mais il est très difficile d'assurer une trajectoire rectiligne des chariots sur terrain en pente ou accidenté sans intervention humaine pour corriger celle-ci. Leur trajectoire pour le déroulement et l'enroulement de la bâche dépend aussi du terrain qu'ils rencontrent, terrain pouvant être très souvent différent pour chacun des chariots tracteurs rendant de fait aléatoire leur trajectoire et résultant dans une durée de l'ensemble des opérations de déroulement et d'enroulement longue et aléatoire en fonction du terrain.

Dans le document FR-2.946.832 est proposé un autre système de déroulement d'une bâche de collecte de petits fruits, en intégrant à celle-ci des boudins gonflables, assurant un déroulement simple et rapide de cette dernière quelles que soient les conditions de terrain. Un tel système a toutefois l'inconvénient d'être fragile, notamment si un engin de récolte est amené à circuler sur ladite bâche, risquant ainsi de percer le boudin et rendant de fait la bâche inutilisable car impossible alors à dérouler ou à enrouler. Il nécessite de plus des volumes d'air comprimé importants de façon à assurer le déroulement rapide de la bâche, ajoutant à la complexité de l'ensemble par la mise en place de groupes compresseurs et de réservoirs très encombrants et gourmands en énergie. Enfin, le remplacement de la bâche conditionne de fait le remplacement des boudins qui y sont intégrés, renchérissant les opérations de maintenance de ladite bâche.

Dans le document EP-0.133.334, est proposé un système d'enroulement et de déroulement d'une bâche de collecte de petits fruits par l'intermédiaire d'une structure mécanique à bras articulés. Bien évidemment, ce type de structure est lourd et encombrant et n'autorise pas un engin automoteur à rouler sur la bâche sans endommager irrémédiablement cette structure métallique. On comprend par ailleurs que la complexité de mise en place d'un tel système ne fait que croître avec la taille de la bâche, la longueur des bras articulés étant liée aux dimensions de la bâche.

La présente invention a pour but de pallier ces inconvénients en proposant un dispositif enrouleur/dérouleur de bâche automatique simple et efficace, assemblé sur une remorque tractée ou sur un véhicule automoteur et exempt des inconvénients susmentionnés de l'état de fa technique.

Selon l'invention, ce but est atteint grâce à un dispositif collecteur de petits fruits, comprenant, de manière connue en soi, une bâche délimitée par une extrémité distale et une extrémité proximale, laquelle est fixée par des moyens connus en soi sur un arbre d'enroulement accouplé à des moyens moteurs, cette bâche pouvant comporter une fente médiane qui s'étend à partir de son extrémité distale et aboutit dans une ouverture ménagée au centre de ladite bâche, ledit dispositif comportant encore des moyens de déploiement et de retrait de cette bâche, remarquable en ce que lesdits moyens de déploiement et de retrait comprennent au moins un et de préférence une pluralité de rubans dotés d'une capacité de flexion et de mémoire de forme dont une de leur extrémité est reliée par des moyens connus en soi à un tambour d'enroulement dont l'axe de rotation est disposé parallèlement ou sensiblement parallèlement à l'axe de rotation de l'arbre d'enroulement de la bâche et sur lequel sont enroulés lesdits rubans, l'autre extrémité de chacun de ces rubans étant reliée au bord distal de ladite bâche, de sorte que lors de leur déroulement, la portion déployée des rubans prend spontanément une conformation rectiligne dotée d'une rigidité permettant à leur extrémité distale de pousser le bord distal de la bâche en l'éloignant de son arbre d'enroulement et, par conséquent, réalise le déploiement de cette dernière au-dessus du sol.

Selon un mode de réalisation avantageux, l'extrémité distale desdits rubans est liée à l'extrémité distale de la bâche par l'intermédiaire de châssis tracteurs.

Selon un mode de réalisation avantageux, l'extrémité distale de la bâche est munie de moyens favorisant son déplacement sur le sol, ces moyens étant constitués par des roues ou des patins équipant les châssis tracteurs.

On comprend ainsi que grâce à ce dispositif, le déroulement de la bâche s'effectue dans une direction perpendiculaire à l'arbre d'enroulement de cette dernière tout en s'adaptant à la surface du terrain, à ses obstacles et à sa déclivité.

Le ou les rubans constituent les moyens moteurs permettant de pousser ou tirer les châssis tracteurs, et procurent l'avantage de limiter très fortement la possibilité de déviation angulaire de ce dernier dans le plan de la bâche, alors qu'ils autorisent une grande déviation angulaire dans le plan vertical pour s'adapter à la conformation des terrains.

Le dispositif selon l'invention procure plusieurs avantages intéressants. Notamment :
- un déroulement rapide (en moins de 5 secondes pour une bâche de 9 mètres de large déroulée sur une longueur de 10 m) son enroulement étant ralenti pour assurer le bon convoyage des fruits, jusqu'à un convoyeur dans lequel ils sont déversés ;
- un enroulement/déroulement de la bâche dans les mêmes conditions sur un terrain plat ou accidenté, présentant ou non des obstacles, et notamment dans des conditions de déclivité importante entre les deux extrémités distales de la bâche ;
- de permettre le passage nécessaire sur la bâche des personnels et des engins oeuvrant à la récolte mécanique des fruits sans endommager le dispositif ;
- de distinguer la fonction exercée par la bâche de celle exercée par les moyens d'enroulement et de déroulement de cette dernière pour simplifier et diminuer le coût de la maintenance et/ou du remplacement de la bâche.

Selon le dispositif de l'invention, la portion déroulée du ruban ou de chaque ruban de la pluralité de rubans disposés en parallèle acquiert automatiquement une rigidité en raison de la mémoire de forme du matériau dans lequel est exécuté ledit ruban ou chacun desdits rubans, d'autre part, cette portion déroulée présente un profil convexe ou concave, dans une section prise parallèlement à l'axe de rotation du tambour d'enroulement desdits rubans. Cette caractéristique est intéressante pour renforcer la rigidité des rubans et limiter ainsi leur déviation dans le plan de la bâche en cas de terrains à forte déclivité. Cette rigidité peut être réalisée par un seul ruban suffisamment large ou par une pluralité de rubans moins larges disposés en parallèle. Dans ce dernier cas, la hauteur du ruban dans sa portion déroulée est plus réduite et favorise le passage de la bâche entre le sol et les branches fruitières surtout lorsque ces dernières sont chargées en fruits et proches du sol.

Selon le dispositif de l'invention, les rubans à la fois rigides et flexibles sont aptes à être enroulés à plat sur le ou les tambours dont l'axe de rotation, lié à la structure porteuse du dispositif, est parallèle ou sensiblement parallèle à l'axe de rotation de l'arbre de la bâche également supporté par ladite structure porteuse.

Selon une importante caractéristique, le déroulement des rubans est assuré par des moyens moteurs.

Selon un mode d'exécution préféré, ce déroulement est réalisé par un couple de galets contrarotatifs disposés de part et d'autre de chaque ruban et assurant le déroulement de ce dernier par friction. D'autre part, ces galets sont conformés pour guider le ruban et assurer la transition entre le profil concave ou convexe de la portion de ruban déroulée et son enroulement à plat sur le tambour, le ruban étant en effet libre de reprendre sa forme en profil concave ou convexe après le passage du couple de galets.

Selon une autre disposition caractéristique, les tambours d'enroulement des rubans sont accouplés à des moyens moteurs connus en soi permettant de les freiner en rotation dans le sens du déroulement pour accompagner le déroulement desdits rubans sans qu'ils ne se déroulent par effet ressort autour des tambours, l'un des galets du couple de galets contrarotatifs associé à chaque ruban étant alors accouplé à des moyens moteurs connus en soi assurant ce déroulement par friction, comme indiqué précédemment, permettant ainsi, par l'intermédiaire de l'extrémité distale de ces derniers, de pousser les châssis tracteurs vers l'extérieur de la structure porteuse pour dérouler la bâche.

Selon une autre disposition caractéristique, l'arbre de bâche est accouplé à des moyens moteurs connus en soi permettant l'enroulement de la bâche, les tambours d'enroulement des rubans étant eux aussi accouplés à des moyens moteurs travaillant en conjugaison avec les moyens moteurs de l'arbre de bâche pour accompagner l'enroulement des rubans, les galets contrarotatifs étant alors laissés libres en rotation pour assurer leur fonction de guidage du ruban. Pendant cette phase, les châssis tracteurs reliés aux rubans sont tractés vers la structure porteuse du dispositif par le ou lesdits rubans et accompagnent ainsi l'enroulement de la bâche en la maintenant légèrement tendue.

Selon un mode d'exécution, le dispositif comprend des moyens permettant de maintenir une légère tension de la bâche durant les phases de déroulement et d'enroulement de cette dernière. La tension de la bâche est réglable au travers desdits moyens pour diminuer, d'une part, son frottement au sol durant le déroulage et, d'autre part, assurer le convoyage des fruits récoltés vers la remorque ou le véhicule automoteur lors de son enroulage par des moyens disposés sur la bâche et connus en soi.

Selon une autre disposition caractéristique, les moyens permettant de maintenir la tension de la bâche consistent en des moyens moteurs tel qu'un moteur hydraulique, un moteur électrique ou autre (voire par des organes élastiques tels que ressorts à spirale) accouplés à l'arbre d'enroulement de la bâche, asservis avec les moyens moteurs de déroulement des rubans (5) agissant sur le ou les châssis tracteurs et permettant de piloter la phase d'enroulement de la bâche en régulant les moyens moteurs d'enroulement des rubans et d'être régulés par les moyens moteurs de déroulage du ruban en phase de déroulage de la bâche.

Selon une autre disposition caractéristique, chaque ruban rigide et flexible est constitué par un feuillard métallique par exemple réalisé en acier, en titane, en laiton et de préférence en acier inoxydable à effet ressort ou mémoire de forme.

Selon une autre disposition caractéristique, chaque ruban rigide et flexible est constitué par un feuillard métallique à effet ressort préformé au préalable dans sa forme concave par pliage ou profilage.

Selon une autre disposition caractéristique, chaque ruban rigide et flexible est constitué par un feuillard pultrudé concave en matière composite comprenant des fibres telles que du verre, du carbone, du kevlar® ou un mélange de ce type de fibres.

L'invention concerne encore un procédé de collecte de petits fruits détachés des arbres ou arbustes fruitiers, au moyen d'une bâche souple s'enroulant sur un arbre rotatif accouplé à une motorisation assurant son ré-enroulement, cette bâche comprenant une extrémité proximale fixée audit arbre et une extrémité distale, ce procédé étant remarquable en ce que le déroulement de la bâche est obtenu au moyen d'au moins un et de préférence une pluralité de rubans dotés d'une capacité de flexion et de mémoire de forme, enroulés sur un ou plusieurs tambours d'enroulement d'axe parallèle ou sensiblement parallèle à l'axe de rotation de l'arbre d'enroulement de la bâche, et dont l'extrémité distale est reliée à l'extrémité distale de ladite bâche, la partie déroulée des rubans acquérant automatiquement une forme rectiligne et une propriété de rigidité grâce à laquelle leur extrémité distale permet d'exercer une poussée sur l'extrémité distale de la bâche assurant le déploiement de cette dernière.

Selon un mode de mise en oeuvre avantageux du procédé de collecte selon l'invention, le déroulement de la bâche est obtenu par le déroulement motorisé des rubans, l'arbre d'enroulement de la bâche étant mis en rotation libre ou exerçant une action de freinage durant cette phase de déroulement tandis que le ré-enroulement ou retrait de la bâche est réalisé par la motorisation accouplée à l'arbre d'enroulement de ladite bâche, le ou les tambours d'enroulement des rubans étant accouplés à des moyens moteurs assurant l'enroulement des rubans simultanément à la phase d'enroulement de la bâche.

L'invention vise encore les machines de récolte de petits fruits comportant un dispositif de collecte comportant une ou plusieurs des caractéristiques décrites ci-dessus.

Les buts, caractéristiques et avantages ci-dessus, et d'autres encore, ressortiront mieux de la description détaillée qui suit et des dessins annexés dans lesquels :
La figure 1 est une vue en perspective illustrant un exemple de réalisation du dispositif appliqué à une installation de récolte mécanisée de récolte dans une phase de réception de petits fruits tels qu'olives ou autres, détachés d'un arbre au moyen d'une machine de secouage.
La figure 2 est une vue de dessus de ce dispositif avec la bâche déployée, les moyens tracteurs T et de récolte V ne sont pas représentés.

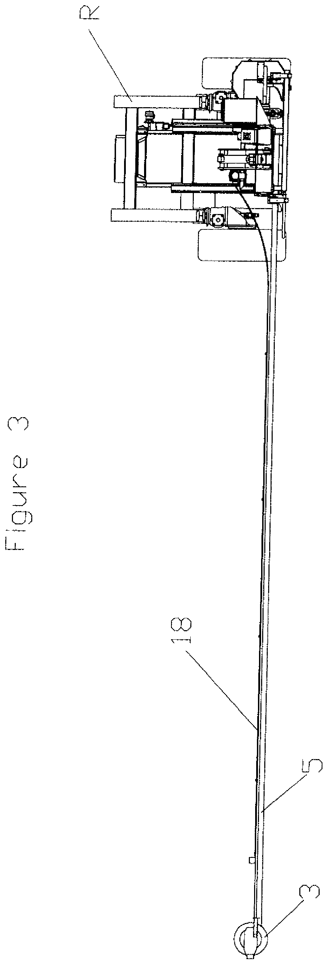

La figure 3 est une vue de côté d'une installation mécanisée de récolte comportant application du dispositif selon l'invention, avec la bâche déployée, les moyens tracteurs T et de récolte V ne sont pas représentés.
La figure 4A est une vue en coupe selon la ligne 4-4 de la figure 2, à caractère schématique et à plus grande échelle illustrant les principaux composants du dispositif de collecte selon une première forme d'exécution de l'invention, considérés au début d'une phase de déploiement de la bâche.
La figure 4B est une vue analogue à la figure 4A et montrant la bâche en situation de complet déploiement.
La figure 5A est une vue en coupe selon la ligne 4-4 de la figure 2, à caractère schématique, d'un autre exemple de réalisation du dispositif collecteur selon l'invention suivant lequel les moyens assurant le déploiement de la bâche comprennent des rubans formés de deux feuillards superposés et dont les moyens de déplacement sur le sol de l'extrémité distale de la bâche sont constitués par des roues.
La figure 5B est une vue analogue à la figure 5A et dans laquelle les moyens de déplacement sur le sol de l'extrémité distale de la bâche sont constitués par un patin.
La figure 6 est une vue partielle en coupe selon la ligne 6-6 de la figure 4A montrant la section du ruban et les galets contrarotatifs.
La figure 7 est une vue partielle en coupe selon la ligne 7-7 de la figure 5A montrant la section des feuillards et les galets contrarotatifs.

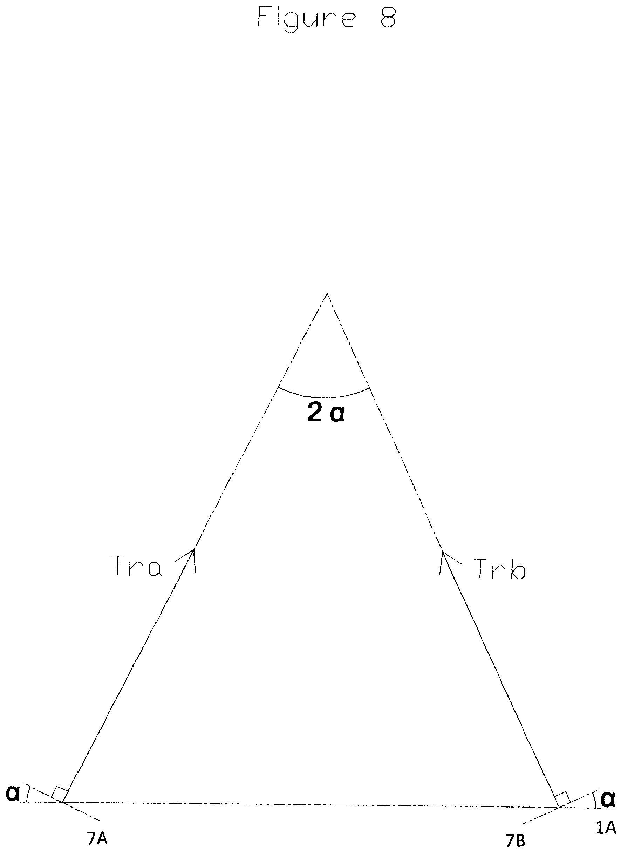

La figure 8 est une vue à caractère schématique illustrant l'inclinaison des tambours d'enroulement.

On se réfère auxdits dessins pour décrire des exemples intéressants quoique nullement limitatifs, de réalisation du dispositif et de mise en oeuvre du procédé de collecte selon l'invention.

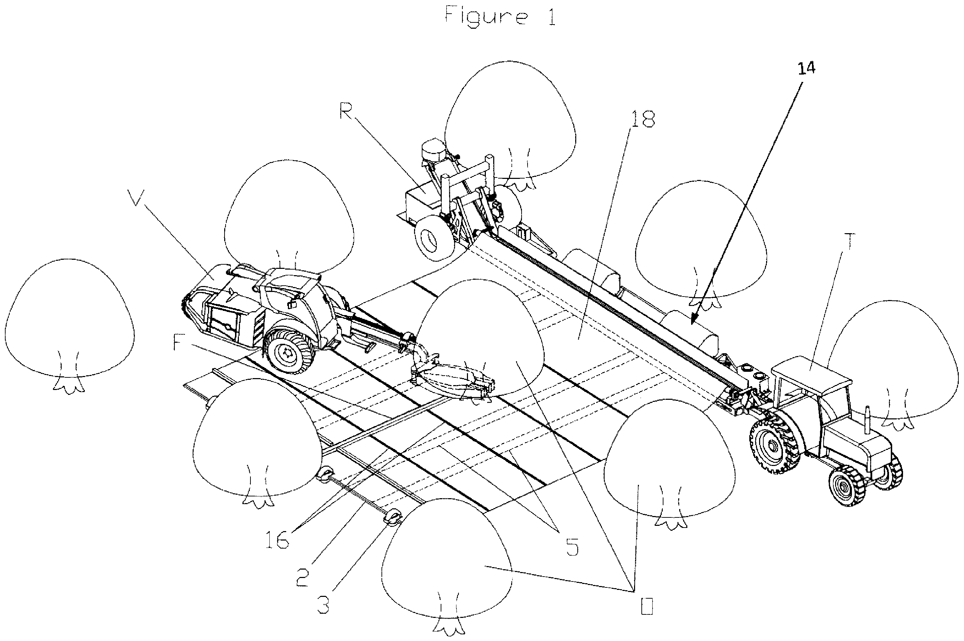

Sur la figure 1, est représenté un mode de mise en oeuvre préféré du dispositif et du procédé de collecte de petits fruits selon l'invention.

Suivant ce mode de réalisation, ce dispositif est supporté par une structure porteuse 14 installée sur une remorque R attelée à un engin tracteur T, positionnée dans un rang d'une plantation d'oliviers O, ce dispositif de collecte comportant une bâche 18 déployée sur le sol sous les branches fructifères de l'un de ces oliviers, de façon à en récolter les fruits détachés par l'intermédiaire d'un engin automoteur de récolte V.

La structure porteuse supportant le dispositif de l'invention pourrait, bien entendu, être installée sur le châssis allongé d'une machine automotrice dédiée à la récolte de petits fruits.

La bâche 18 peut avantageusement comporter une fente médiane F qui s'étend à partir de son extrémité distale et aboutit dans une ouverture C ménagée au centre de ladite bâche. Cette ouverture comporte des moyens d'étanchéité adéquats connus en soi et non illustrés visant à éviter la chute d'olives vers le sol, au niveau de ladite ouverture lorsque la bâche 18 est déployée en position de récolte ; de la sorte, la bâche entoure en effet complètement le tronc de l'arbre et couvre la totalité de la zone de récolte située au-dessous des branches fructifères de l'arbre. On note, au passage, que l'utilisation d'un engin de récolte V lourd peut amener ce dernier à se déplacer sur la bâche 18, et notamment sur les bords latéraux de celle-ci, justifiant ainsi la nécessité d'éviter de positionner toute partie d'un dispositif enrouleur/dérouleur de bâche dans ces zones latérales afin d'éviter leur endommagement.

La demi-partie distale de la bâche 18 est ainsi constituée de deux portions 18a, 18b délimitées par la fente médiane F. L'extrémité distale de chacune de ces portions est reliée fixement et de manière connue en soi à un châssis tracteur 2a, 2b.

On comprend aussi que la remorque comportant la bâche enroulée est acheminée par l'engin tracteur T entre les rangées d'arbres et immobilisée au niveau de l'arbre à récolter O de façon à ce que l'entrée de la fente F de la bâche coïncide avec le tronc de ce dernier pour pouvoir être déployée sous les branches fructifères dudit l'arbre.

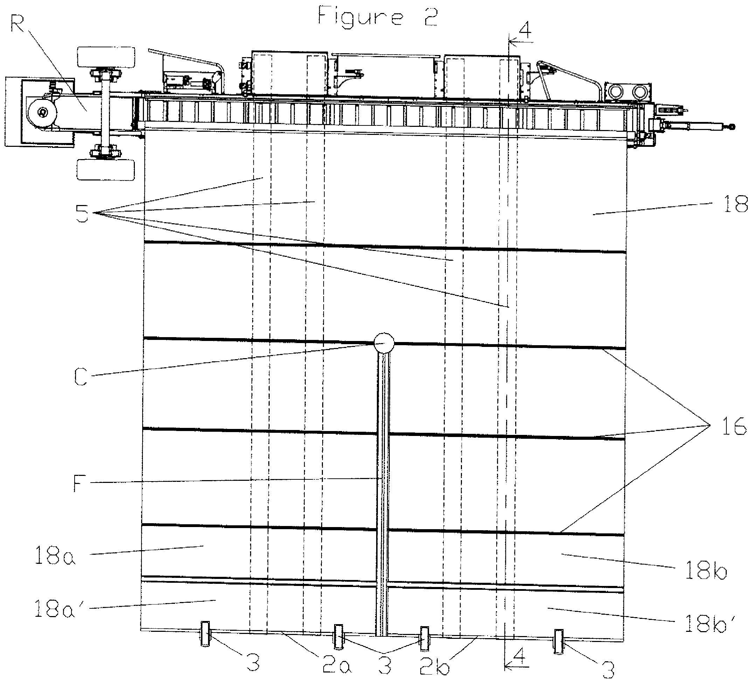

Il est précisé que le terme de bâche désigne, dans la présente description, une surface apte à collecter les fruits détachés de l'arbre lorsque celle-ci est disposée entre ledit arbre et le sol. De fait, cette bâche est constituée par une matière souple, pleine ou ajourée telle qu'un filet, apte à permettre son enroulement/déroulement fréquent autour d'un axe et pouvant disposer de moyens aptes à accompagner les fruits tombés sur ladite bâche lors de son enroulement tels que des tasseaux transversaux 16 (figure 2).

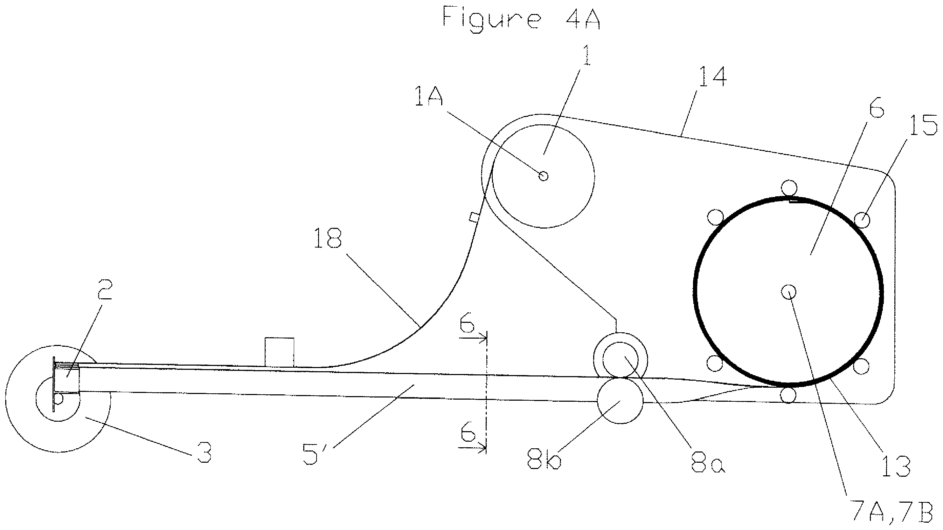

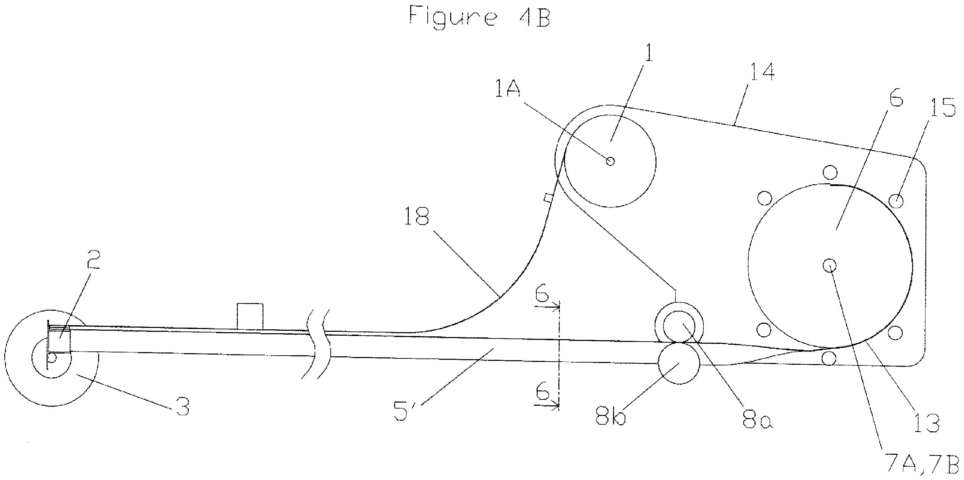

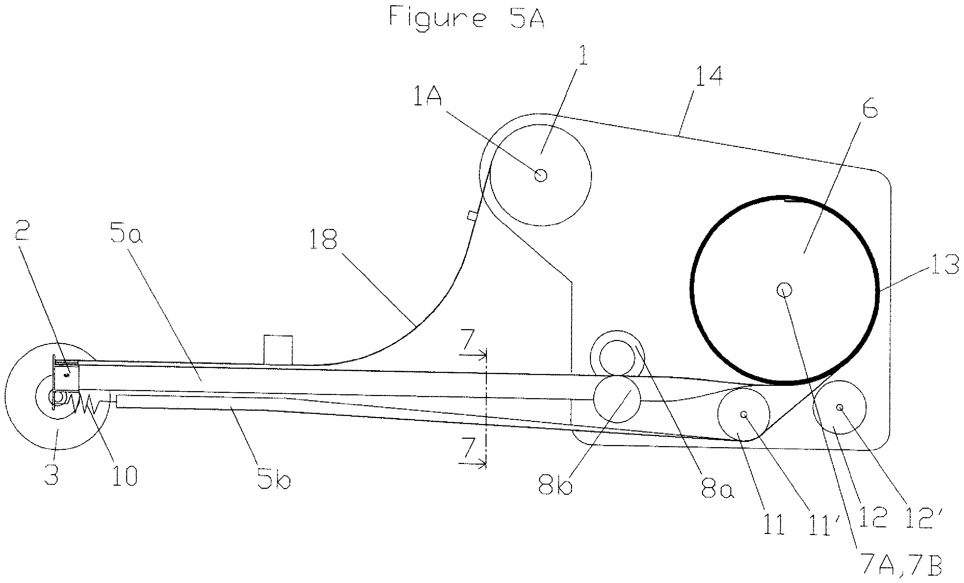

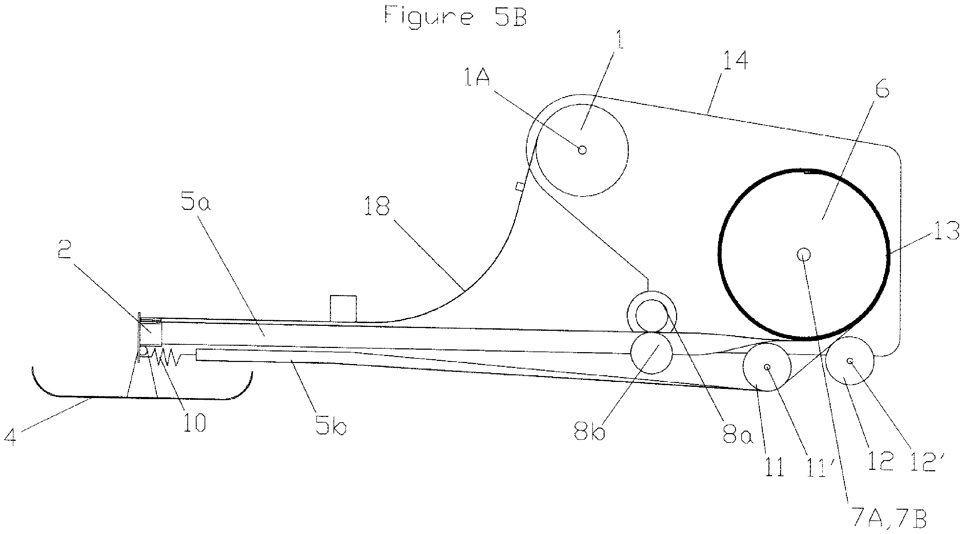

La bâche 18 est fixée, par l'intermédiaire de son extrémité proximale et par des moyens connus en soi, sur un arbre d'enroulement 1 supporté par la structure porteuse 14. Le châssis tracteur 2 ou chaque châssis tracteur 2a, 2b est solidaire de moyens facilitant le déplacement de la bâche 18 sur le sol. Ces moyens peuvent être constitués par des roues 3 (figures 4A, 4B et 5A) ou par des patins ou skis 4 (figure 5B) permettant de tracter la bâche lors de son déploiement sur le sol ou d'accompagner son enroulement dans la phase de retrait de celle-ci.

Le dispositif de collecte comporte encore des moyens de déploiement et de retrait de la bâche 18.

Selon une importante caractéristique de l'invention, ces moyens de déploiement et de retrait comprennent au moins un et de préférence une pluralité de rubans 5 dotés d'une capacité de flexion et de mémoire de forme, enroulés en spirale autour d'un tambour d'enroulement 6 dont l'axe de rotation est disposé parallèlement ou sensiblement parallèlement à l'axe de rotation de l'arbre d'enroulement 1 de la bâche 18. L'extrémité opposée de ces rubans 5 est reliée au bord distal de la bâche et, selon le mode d'exécution illustré, au bord distal 18a' ou 18b' des portions 18a ou 18b, respectivement, de ladite bâche. Par exemple, ces rubans 5 présentent une largeur qui peut être comprise entre 20 cm et 1 m et une épaisseur comprise entre 0,2 mm et 2 mm.

Selon le mode d'exécution représenté sur les dessins annexés, le dispositif comprend quatre rubans présentant une largeur à plat de 300 mm et une épaisseur de 1 mm.

Chaque ruban 5 présente une flexibilité permettant de l'enrouler sur un tambour d'enroulement 6. Ce tambour d'enroulement, ou chaque tambour d'enroulement 6 supporté par la structure porteuse 14, est monté tournant autour d'un axe de rotation 7A, 7B.

Le tambour d'enroulement ou chaque tambour d'enroulement 6 est accouplé à une motorisation connue en soi (non représentée), par exemple constituée par un moteur hydraulique assurant l'enroulement dudit ruban sur ledit tambour 6 et accompagnant son déroulement en permettant de maintenir une tension sur ledit ruban propre à le garder plaqué sur ledit tambour. Il est en effet important d'empêcher une rotation libre du tambour qui entrainerait le déroulement de l'enroulement spiroïdal entourant ledit tambour, par effet ressort.

Chaque ruban 5 peut être avantageusement constitué d'au moins un feuillard, de préférence exécuté en acier inoxydable à effet ressort ou mémoire de forme apte à s'enrouler à plat sur un tambour et dont la partie déroulée 5' acquiert automatiquement une forme rectiligne et une rigidité. Selon l'invention, la portion de ruban 5' déroulée, comprise entre sa portion enroulée sur le tambour d'enroulement 6 et son extrémité distale reliée au bord distal 18a' ou 18b' de la bâche 18 devient donc rectiligne et doté d'une propriété de rigidité propre à pousser les châssis tracteurs 2a, 2b lors de leur déroulement, et à tracter lesdits châssis tracteurs lors de leur enroulement. Cette rigidité se trouve renforcée par le fait que les rubans 5 sont dotés d'une mémoire de forme grâce à laquelle ils acquièrent, automatiquement, une section de forme concave lors de leur déroulement. Lorsque les rubans 5 sont constitués, chacun, par un unique feuillard, la concavité 19 de leur portion déroulée 5' est de préférence orientée vers le sol, cette orientation permettant d'éviter d'endommager la bâche au contact des bords longitudinaux des rubans.

Selon l'exemple illustré (figure 2), le dispositif comporte deux paires de rubans 5 espacés, disposées de part et d'autre de l'axe médian de la bâche et de la fente F. Chaque extrémité distale 18a', 18b' des portions 18a, 18b de la bâche est également équipée d'un châssis tracteur, respectivement 2a, 2b, muni de deux roues 3 ou patins 4.

La mémoire de forme que présentent les rubans 5 peut résulter de la nature du matériau dans lequel sont réalisés lesdits rubans ou d'un procédé ou traitement particulier de ce matériau connu en soi.

Le dispositif comprend encore des moyens moteurs assurant le déroulement des rubans 5.

Selon l'exemple de réalisation illustré, ce déroulement est réalisé par des couples de galets guides contrarotatifs 8a, 8b d'axes de rotation parallèles à l'axe du ou des tambours d'enroulement 6 des rubans 5, et disposés de part et d'autre de la portion déroulée du ruban, de préférence, à distance réduite des tambours d'enroulement 6. Les rubans 5 se trouvent ainsi pressés entre les galets de ces couples de galets contrarotatifs. Ces derniers coopèrent entre eux, pour entrainer le déroulement des rubans par effet de friction, l'un (8a) de ces galets guides 8a, 8b étant relié à une motorisation par exemple constituée par un moteur hydraulique assurant le déroulement du ruban 5 de son tambour 6.

Les pourtours des galets de chaque couple de galets guides contrarotatifs 8a, 8b présentent des profils coopérant favorisant le passage de la forme plate du ruban à l'état enroulé, à la forme bombée dudit ruban, à l'état déroulé.

Les deux galets de chaque couples de galets guides contrarotatifs peuvent avoir, en périphérie, une forme cylindrique. Selon un mode de réalisation préféré, ils ont, périphériquement, des formes complémentaires. L'un (8a) de ces galets présente, en périphérie, une section concave, tandis que l'autre galet (8b) présente, en périphérie, une forme convexe. Cette conformation complémentaire des pourtours des galets permet d'accompagner la formation de la section courbe acquise par les rubans 5 à partir du moment où ils quittent l'enroulement en spirale et à plat supporté par les tambours d'enroulement 6.

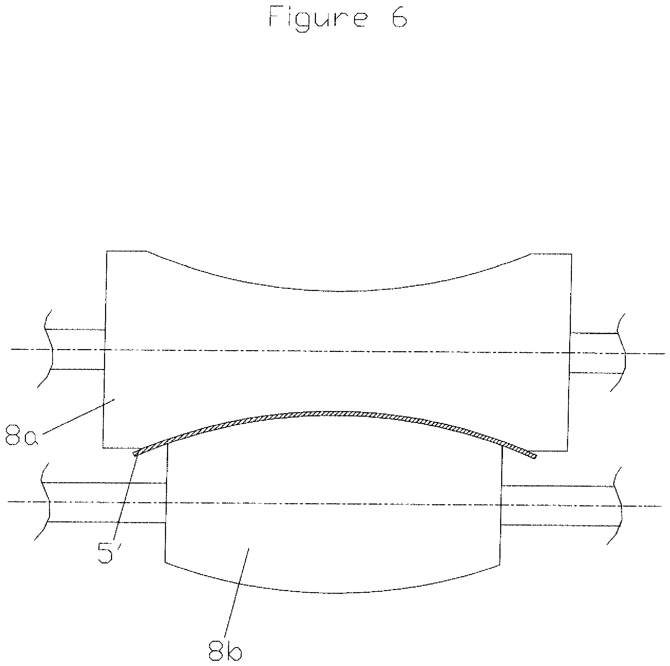

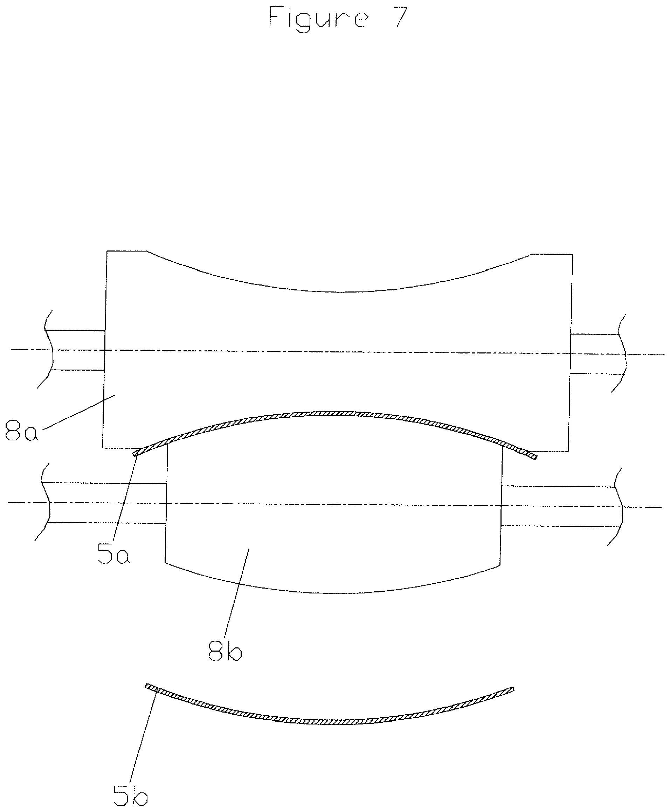

Selon le mode d'exécution représenté aux figures 6 et 7, le galet supérieur (galet 8a) présente un profil concave et le galet inférieur (galet 8b) présente un profil convexe.

Dans un autre mode de réalisation, chaque ruban est constitué de deux bandes de feuillards flexibles superposées 5a, 5b, dont les courbures sont, de préférence, orientées inversement. Cet agencement permet : - de renforcer la rigidité longitudinale des rubans ; - d'assurer un meilleur glissement de la bâche sur le terrain ; et - d'éviter l'endommagement par les bordures latérales des deux feuillards des éléments installés sur le terrain des plantations (oliveraies ou vergers) tels que des tuyaux d'arrosage ou autres.

Dans ce cas, les feuillards superposés 5a, 5b sont enroulés sur le même tambour. Toutefois, seul le feuillard supérieur 5a est entrainé par une motorisation non représentée sur les dessins, lors du déploiement de la bâche 18, ledit feuillard supérieur 5a étant déplacé en translation longitudinale par le couple de galets contrarotatifs 8a, 8b entre lesquels il est engagé, le galet supérieur 8a étant entrainé en rotation par un moteur hydraulique ou autre, comme indiqué ci-dessus. Le déroulement du feuillard inférieur 5b est assuré par la traction exercée par les châssis tracteurs 2a, 2b équipant l'extrémité distale de la bâche, lesquels se trouvent eux-mêmes repoussés vers l'extérieur, en les éloignant de la structure porteuse, sous la poussée communiquée par l'extrémité distale du feuillard supérieur 5a.

L'extrémité distale du feuillard inférieur est reliée aux châssis tracteurs 2a, 2b par l'intermédiaire d'un organe élastique, par exemple un ressort 10 agissant en traction. Un galet 11 permet le guidage du ruban inférieur 5b et évite que ledit ruban inférieur puisse interagir avec le galet guide inférieur 8b du ruban supérieur 5a. D'autre part, l'organe élastique 10 permet de compenser les distorsions dimensionnelles dues à l'enroulement superposé des deux feuillards. Un galet 12 d'axe 12' parallèle à l'axe 11' du galet 11 sur lequel s'appuie le ruban inférieur 5b lorsqu'il quitte l'enroulement 13 permet d'éviter un déroulement intempestif du ruban inférieur 5b.

Les galets 11, 12 sont disposés à proximité du tambour d'enroulement 6. Les axes respectifs 11', 12', des galets 11, 12 sont, par exemple liés à la structure porteuse 14 du dispositif et disposés parallèlement aux axes des galets guides 8a, 8b, à l'axe 1A d'enroulement de la bâche et à l'axe 7A, 7B de rotation des tambours 6. Par ailleurs, ils sont disposés en amont des galets guides 8a, 8b, en considérant le sens de déroulement des rubans.

On conçoit que les galets 8a, 8b, 11 et 12 ont une largeur adaptée à la largeur des rubans 5.

Chaque ruban 5a, 5b rigide et flexible est constitué par un feuillard métallique par exemple réalisé en acier, en titane, en laiton et de préférence en acier inoxydable à effet ressort ou mémoire de forme.

Selon un autre mode de réalisation, chaque ruban 5a, 5b rigide et flexible est constitué par un feuillard métallique à effet ressort préformé au préalable dans sa forme concave par pliage ou profilage.

Selon une autre disposition caractéristique, chaque ruban rigide est constitué par un feuillard pultrudé concave en matière composite comprenant des fibres telles que du verre, du carbone, du kevlar® ou un mélange de ce type de fibres.

La concavité des rubans rigides et flexibles 5 associée à leur largeur et à la rigidité intrinsèque du matériau constituant ces rubans conditionnent le mouvement des chariots tracteurs 2a, 2b dans une direction perpendiculaire à l'axe des tambours 6 d'enroulement des rubans 5. Il en serait de même pour d'autre combinaisons de rubans constituant les moyens moteurs entre le châssis tracteur et la remorque, telles qu'un ruban simple, une pluralité de rubans rigides superposés ou une combinaison de rubans rigides juxtaposés et superposés. Ce système a ainsi l'avantage d'assurer une trajectoire des châssis tracteurs dans une direction précise tout en autorisant une grande latitude de fonctionnement dans le plan vertical de façon à adapter leur trajectoire à la configuration du sol.

Selon une autre caractéristique de l'invention, les axes 7A, 7B de rotation des tambours 6 d'enroulement des rubans 5 reliés aux châssis tracteurs 2a, 2b, respectivement, équipant l'extrémité distale de chacune des deux portions 18a, 18b de la bâche, sont très légèrement désalignés dans le plan horizontal, de façon à communiquer aux châssis tracteurs une trajectoire convergente tendant à rapprocher les bords délimitant la fente F en fin de déroulement de la bâche. Cette disposition permet de refermer la fente de la bâche après le passage du tronc et à obtenir une étanchéité renforcée autour de l'ouverture centrale C et entre les bords des portions 18a, 18b délimitées par ladite fente médiane F. L'angle α ainsi obtenu entre la trajectoire Tra, Trb de chaque châssis tracteur avec l'axe médian de la bâche (ou entre l'axe 1A de l'arbre d'enroulement 1 et les axes 7A, 7B des tambours) est ainsi, par exemple, de l'ordre de un degré, la trajectoire des châssis tracteurs restant alors dans une direction sensiblement parallèle à l'axe médian de la bâche.

On comprend que, si on ferme chaque axe de rotation des tambours d'enroulement 6 des rubans 5 d'un angle α avec l'axe de rotation de l'arbre d'enroulement 1 de la bâche, les deux châssis tracteurs 2a, 2b équipant le bord distal 18a', 18b' des portions 18a, 18b de la bâche vont avoir une trajectoire convergente égale à deux fois cet angle α, en fin de trajectoire, ce qui permet d'obtenir un recouvrement effectif des bords de la fente médiane F de la bâche 18.

Selon un mode d'exécution, des moyens sont disposés autour des tambours d'enroulement 6 des rubans 5, à distance de la périphérie de l'enroulement 13 formé autour de l'arbre 7 des tambours, lorsque lesdits rubans sont totalement enroulés sur lesdits tambours. Ces moyens permettent de canaliser l'enroulement 13 des rubans sur leur tambour 6. Selon l'exemple de réalisation illustré, ces moyens sont constitués par des rouleaux 15 libres en rotation.

L'arbre d'enroulement 1 de la bâche 18 peut être accouplé à une motorisation, tel que, par exemple, un moteur hydraulique, coopérant avec le dispositif d'enroulement et de déroulement de ladite bâche de façon à freiner légèrement la bâche lors de son déroulement, pour maîtriser la vitesse de déroulement par son maintien en tension et limiter aussi les frottements au sol de la bâche dans cette phase, et à procéder à l'enroulement de la bâche, le dispositif enrouleur-dérouleur assurant dans ce cas un léger freinage pour accompagner cet enroulement, permettant de ramener alors les fruits tombés sur la bâche vers un dispositif de collecte, voire vers un système de tri, situé sur la remorque.

On donne ci-après ci-après un exemple de mise en oeuvre du procédé et de réalisation du dispositif dérouleur-enrouleur de bâches de collecte de la récolte de petits fruits détachés des arbres ou arbustes décrit ci-dessus.

La machine, par exemple constituée d'une remorque R supportant la structure porteuse 14 du dispositif de l'invention attelée à un engin tracteur T, se déplace entre les rangées d'arbres fruitiers et elle est arrêtée et positionnée, successivement, en face de chaque arbre à récolter. Un système de vision peut être axé sur la fente de la bâche de façon à renvoyer une image au conducteur de la machine du bon positionnement de la bâche par rapport au tronc de l'arbre. La machine peut être aussi avantageusement équipée d'une pince vibrante supportée par un bras télescopique installé sur le châssis de ladite machine, le secouage des arbres fruitiers pouvant être aussi réalisé par des opérateurs disposant d'appareils portables manuels (peignes) ou mécanisés, ou comme représenté sur la figure 1 des dessins annexés, par un engin automoteur V équipé d'une pince vibrante.

Avant le déroulement de la bâche, celle-ci se trouve enroulée autour de son arbre 1 tandis que les rubans 5 sont enroulés autour de leur tambour d'enroulement 6, bloqué alors en rotation pour éviter tout déroulement intempestif du ruban autour du tambour par effet ressort, à l'exception d'une partie terminale qui est reliée aux châssis tracteurs 2a, 2b. La machine étant immobilisée face à l'arbre à récolter O, la bâche 18 est déployée sur le sol, à l'aplomb des branches fructifères dudit arbre, autour du tronc de ce dernier.

On procède au déroulement de la bâche en actionnant simultanément et de façon synchronisée les moteurs d'entrainement en rotation du galet entraineur de chaque couple de galets guides contrarotatifs qui vont alors dérouler le ruban par friction tout en pilotant la régulation en mode frein des moyens moteurs du tambour et de l'arbre de bâche et pousser ainsi chacun des deux châssis tracteurs 2a, 2b équipant l'extrémité distale de la bâche 18 dans une direction perpendiculaire ou sensiblement perpendiculaire à l'axe 1A de l'arbre d'enroulement 1 de ladite bâche et l'éloignant dudit axe. La bâche 18 se trouve ainsi tractée et déployée jusqu'au déroulement complet de cette dernière, détecté, par exemple par un capteur de fin de course qui permet de stopper le déroulement de la bâche, ou par un arrêt volontaire commandé par l'opérateur. Durant cette phase, le moteur d'entraînement de l'arbre d'enroulement 1 de la bâche 18 et les moteurs d'entrainement des tambours 6 d'enroulement des rubans 5 fonctionnent en mode frein, en assurant ainsi le maintien de la tension de la bâche 18 et le maintien de l'enroulement des rubans sur les tambours 6, ces actions de freinage étant obtenues à l'aide de moyens connus en soi.

A la fin de la phase de récolte, l'opérateur commande alors le retrait de la bâche par son ré-enroulement sur son arbre 1 en actionnant le moteur d'entrainement dudit arbre. L'action est synchronisée avec les moteurs d'entrainement des tambours 6 qui accompagnent l'enroulement de la bâche et sont ainsi régulés pour ré-enrouler les rubans 5, les moteurs d'entrainement en rotation du galet entraineur de chaque couple de galets guides 8a, 8b étant alors en mode de rotation libre, laissant les galets guides accompagner simplement le passage des rubans de leur forme concave à leur forme à plat.

Dans cette phase de fonctionnement, le ré-enroulement de la bâche est piloté par le moteur d'entrainement de l'arbre d'enroulement 1 de la bâche 18.

On souligne encore que, dans la phase d'enroulement, ce sont les moyens moteurs de l'arbre d'enroulement 1 de la bâche 18 qui sont activés pour enrouler ladite bâche autour de son arbre d'enroulement rotatif. Toutefois la bâche est fixée aux châssis tracteurs 2a, 2b dont le déplacement est dépendant de l'enroulement du ou des rubans 5 sur leurs tambours d'enroulement 6. Pour éviter de bloquer l'enroulement de la bâche, le moteur du tambour d'enroulement est asservi pour accompagner l'enroulement de la bâche 18 en enroulant les rubans à une vitesse adaptée pour que les châssis tracteurs 2a, 2b accompagnent l'enroulement de la bâche de façon à maintenir ladite bâche en légère tension pendant cette phase d'enroulement. Les moyens moteurs accouplés à l'un des galets des couples de galets guides contrarotatifs 8a, 8b sont quant à eux débrayés pour accompagner librement l'enroulement des rubans 5.

Dans la phase de déroulement de la bâche, comme vu précédemment, ce sont les moteurs accouplés aux galets guides entraineurs des couples de galets 8a, 8b qui déroulent les rubans par friction. Les moteurs accouplés aux tambours d'enroulement 6 des rubans 5 et à l'arbre d'enroulement 1 de la bâche 18 fonctionnent en mode frein pour, d'une part, maintenir les rubans plaqués sur leurs tambours (et ainsi éviter qu'ils se déroulent intempestivement par effet ressort) et, d'autre part, maintenir la bâche en légère tension (et ainsi empêcher qu'elle ne puisse se dérouler subitement en accordéon et frotter trop fortement sur le sol).

Il est noté que le maintien en tension de la bâche pourrait être obtenu par tout autre moyen. Par exemple, organes élastiques connus en soi tel que des ressorts à spirale reliés à l'arbre d'enroulement 1 de la bâche 18 qui sont comprimés pendant la phase de déroulement par la traction de la bâche par les châssis tracteurs et assurent la traction de la bâche par leur détente, lors de la phase d'enroulement de la bâche. Il pourrait encore s'agir aussi d'un ressort de torsion inséré dans l'arbre 1 de la bâche 18.

Ces moyens sont asservis aux moyens moteurs agissant sur le ou les châssis tracteurs 2a, 2b et permettent de piloter la phase d'enroulement de la bâche en régulant les moyens moteurs d'enroulement des rubans 5 et d'être régulés par les moyens moteurs de déroulage du ruban en phase de déroulage de la bâche.

Le fonctionnement du mode de réalisation illustré aux figures 5A, 5B est sensiblement le même que celui qui vient d'être décrit.

On ne décrit pas la motorisation actionnant les organes actifs du dispositif ni les appareils de commande et de gestion de cette motorisation, ni les circuits de distribution, ceux-ci étant à la portée de l'Homme du Métier.

L'invention concerne encore un procédé de collecte de petits fruits détachés des arbres ou arbustes fruitiers, au moyen d'une bâche souple 18 déployée sur le sol, sous les branches fructifères d'arbres fruitiers à récolter, et s'enroulant sur un arbre rotatif 1 accouplé à une motorisation assurant son ré-enroulement, cette bâche comprenant une extrémité proximale fixée audit arbre rotatif et une extrémité distale, ce procédé étant remarquable en ce que le déroulement de la bâche est obtenu au moyen d'au moins un et de préférence une pluralité de rubans 5 dotés d'une capacité de flexion et de mémoire de forme, enroulés sur un ou plusieurs tambours d'enroulement 6 d'axe de rotation 7A, 7B parallèle ou sensiblement parallèle à l'axe de rotation 1A de l'arbre d'enroulement 1 de la bâche 18, et dont l'extrémité distale est reliée à l'extrémité distale de la bâche, la partie déroulée 5' des rubans 5 acquérant automatiquement, au fur et à mesure du déroulement de ceux-ci, une forme rectiligne et une propriété de rigidité grâce à laquelle leur extrémité distale permet d'exercer une poussée sur l'extrémité distale de la bâche et de déplacer ladite extrémité distale en direction de l'extérieur de la structure porteuse 14 en assurant le déploiement de ladite bâche.

Le déploiement de la bâche 18 est obtenu par le déroulement motorisé des rubans 5, l'arbre d'enroulement 1 de la bâche étant accouplé à une motorisation exerçant une action de freinage durant cette phase de déroulement, tandis que le ré-enroulement ou retrait de la bâche est réalisé par ladite motorisation accouplée à l'arbre d'enroulement de ladite bâche, le ou les tambours d'enroulement 6 des rubans 5 étant accouplés à des moyens moteurs assurant l'enroulement des rubans simultanément à la phase d'enroulement de la bâche.

L'invention vise aussi les machines de récolte de petits fruits comportant un dispositif de collecte comprenant une ou plusieurs des caractéristiques décrites dans la présente description.

## Revendications

1. Procédé de collecte de petits fruits détachés des arbres ou arbustes fruitiers, au moyen d'une bâche souple (18) déployée au-dessus du sol, sous les branches fructifères desdits arbres ou arbustes à récolter, et s'enroulant sur un arbre rotatif (1) accouplé à une motorisation assurant son ré-enroulement, cette bâche comprenant une extrémité proximale fixée audit arbre rotatif et une extrémité distale, **caractérisée en ce que** le déroulement de la bâche est obtenu au moyen d'au moins un et de préférence une pluralité de rubans (5) dotés d'une capacité de flexion et de mémoire de forme, enroulés sur un ou plusieurs tambours d'enroulement (6) d'axe de rotation (7A, 7B) parallèle ou sensiblement parallèle à l'axe de rotation (1A) de l'arbre d'enroulement (1) de la bâche (18), et dont l'extrémité distale est reliée à l'extrémité distale de ladite bâche, la partie déroulée (5') des rubans (5) acquérant automatiquement, au fur et à mesure du déroulement de ceux-ci, une forme rectiligne et une propriété de rigidité grâce à laquelle leur extrémité distale permet d'exercer une poussée sur l'extrémité distale de la bâche et de déplacer ladite extrémité distale en direction de l'extérieur de la structure porteuse (14) en assurant le déploiement de ladite bâche.

2. Procédé selon la revendication 1, **caractérisé en ce que** le déroulement de la bâche (18) est obtenu par le déroulement motorisé des rubans (5), l'arbre d'enroulement (1) de la bâche étant accouplé à une motorisation exerçant une action de freinage durant cette phase de déroulement, tandis que le ré-enroulement ou retrait de la bâche est réalisé par ladite motorisation accouplée à l'arbre d'enroulement de ladite bâche, le ou les tambours d'enroulement (6) des rubans (5) étant accouplés à des moyens moteurs assurant l'enroulement des rubans simultanément à la phase d'enroulement de la bâche..

3. Dispositif de collecte de petits fruits détachés d'arbres ou arbustes fruitiers, comprenant une bâche (18) délimitée par une extrémité distale et une extrémité proximale laquelle est fixée sur un arbre d'enroulement (1) supporté par une structure porteuse (14) et accouplé à un moteur d'entrainement en rotation, ledit dispositif comportant encore des moyens de déploiement et de retrait de cette bâche, **caractérisé en ce que** lesdits moyens de déploiement et de retrait comprennent au moins un et de préférence une pluralité de rubans (5) dotés d'une capacité de flexion et de mémoire de forme dont une extrémité est reliée à un tambour d'enroulement (6) également supporté par la structure porteuse (14) et d'axe (7A, 7B) disposé parallèlement à l'axe de rotation (1A) de l'arbre d'enroulement (1) de la bâche (18) et sur le ou lesquels sont enroulés, en spirale, lesdits rubans (5), et dont l'autre extrémité est reliée à l'extrémité distale de ladite bâche, de sorte que lors de leur déroulement, la portion déployée (5') des rubans (5) prend spontanément une conformation rectiligne dotée d'une rigidité et que leur extrémité distale permet de pousser le bord distal de la bâche (18) en l'éloignant de son arbre d'enroulement (1) et, par conséquent, réalise le déploiement de cette dernière au-dessus du sol.

4. Dispositif selon la revendication 3, **caractérisé en ce que** l'extrémité distale du ou des rubans (5) est reliée à l'extrémité distale de la bâche (18) par l'intermédiaire d'un ou plusieurs châssis tracteurs (2, 2a, 2b).

5. Dispositif selon l'une quelconque des revendications 3 ou 4, **caractérisé en ce que** la bâche (18) comporte une fente médiane (F) qui s'étend à partir de son extrémité distale et aboutit dans une ouverture (C) ménagée au centre de ladite bâche.

6. Dispositif suivant l'une quelconque des revendications 4 ou 5, **caractérisé en ce que** les axes (7A, 7B) des tambours d'enroulement (6) des rubans (5) reliés aux châssis tracteurs (2a, 2b) équipant l'extrémité distale de chacune des deux portions (18a, 18b) de la bâche, sont très légèrement désalignés dans le plan horizontal, de façon à communiquer aux châssis tracteurs une trajectoire (Tra, Trb) tendant à rapprocher les bords délimitant la fente (F), en fin de déroulement de la bâche, de sorte à refermer la fente de ladite bâche après le passage du tronc de l'arbre à récolter, et à obtenir une étanchéité autour de l'ouverture centrale (C) et entre les bords des portions (18a, 18b) délimitées par ladite fente médiane (F).

7. Dispositif selon l'une quelconque des revendications 4 à 6, **caractérisé en ce que** le châssis tracteur (2) ou chaque châssis tracteur (2a, 2b) est muni de moyens permettant son déplacement sur le sol, ces moyens étant constitués par des roues (3) ou par des patins (4).

8. Dispositif selon l'une quelconque des revendications 3 à 7, **caractérisé en ce que** le ou les tambours d'enroulement (6) sont accouplés à des moyens moteurs permettant l'enroulement des rubans (5).

9. Dispositif selon l'une quelconque des revendications 3 à 8, **caractérisé en ce qu'**il comprend des moyens permettant de maintenir la tension légère de la bâche durant les phases de déroulement et d'enroulement de cette dernière.

10. Dispositif selon la revendication 9, **caractérisé en ce que** les moyens permettant de maintenir la tension légère de la bâche (18) consistent en des moyens moteurs accouplés à l'arbre d'enroulement (1) de la bâche asservis avec les moyens moteurs de déroulement des rubans (5) agissant sur le ou les châssis tracteurs (2, 2a, 2b) et permettant de piloter la phase d'enroulement de la bâche (18) en régulant les moyens moteurs d'enroulement des rubans (5), et d'être régulés par les moyens moteurs de déroulage du ruban en phase de déroulage de la bâche.

11. Dispositif selon l'une quelconque des revendications 3 à 10, **caractérisé en ce que** les moyens de déroulement des rubans sont constitués par des couples de galets guides contrarotatifs (8a, 8b) disposés à proximité des tambours d'enroulement (6) et entre lesquels sont engagés lesdits rubans (5) qui se trouvent entrainés par friction par lesdits couples de galets.

12. Dispositif suivant la revendication 11, **caractérisé en ce que** les pourtours des galets de chaque couple de galets guides contrarotatifs (8a, 8b) présentent des profils coopérant favorisant le passage de la forme plate du ruban à l'état enroulé, à la forme bombée dudit ruban, à l'état déroulé.

13. Dispositif selon la revendication 12, **caractérisé en ce que** le galet supérieur (galet 8a) présente un profil concave et le galet inférieur (galet 8b) présente un profil convexe.

14. Dispositif suivant l'une quelconque des revendications 3 à 13, **caractérisé en ce que** chaque ruban est constitué de deux feuillards superposés comprenant un feuillard supérieur (5a) réalisé selon les revendications précédentes, et un feuillard inférieur (5b) relié à un châssis tracteur (2, 2a, 2b) et s'enroulant également sur le tambour (6) d'enroulement du feuillard supérieur (5a).

15. Dispositif selon la revendication 14, **caractérisé en ce qu'**il comprend au moins un galet (11) d'axe (11') parallèle à l'axe (7A, 7B) des tambours (6) et disposé à proximité de l'axe des tambours (6) et en amont des galets guides (8a, 8b), en considérant le sens de déroulement des rubans (5), ce galet (11) permettant le guidage du ruban inférieur (5b) et empêchant que ledit ruban inférieur puisse interagir avec le galet guide inférieur (8b) du ruban supérieur (5a).

16. Dispositif suivant l'une quelconque des revendications 14 ou 15, **caractérisé en ce que** chaque feuillard inférieur (5b) est relié à un châssis tracteur (2, 2a, 2b) par l'intermédiaire d'un organe élastique (10) pour compenser les distorsions dimensionnelles dues à l'enroulement superposé des deux feuillards flexibles.

17. Dispositif suivant l'une quelconque des revendications 3 à 16, **caractérisé en ce que** chaque ruban (5a, 5b) rigide et flexible est constitué par un feuillard métallique par exemple réalisé en acier, en titane, en laiton et de préférence en acier inoxydable à effet ressort ou mémoire de forme.

18. Dispositif selon l'une quelconque des revendications 3 à 16, **caractérisé en ce que** chaque ruban (5a, 5b) rigide et flexible est constitué par un feuillard métallique à effet ressort préformé au préalable dans sa forme concave par pliage ou profilage.

19. Dispositif suivant l'une quelconque des revendications 3 à 16, **caractérisé en ce que** chaque ruban (5a, 5b) rigide et flexible est constitué par un feuillard pultrudé concave en matière composite comprenant des fibres telles que du verre, du carbone, du kevlar® ou un mélange de ce type de fibres.

20. Machine de récolte de petits fruits, **caractérisée en ce qu'**elle comporte un dispositif de collecte selon l'une quelconque des revendications 3 à 19.

## Patentansprüche

1. Verfahren zum Sammeln von kleinen Früchten, die von Obstbäumen oder -sträuchern abgerissen wurden, mithilfe einer flexiblen Plane (18), die auf dem Boden unter den früchtetragenden Ästen der abzuerntenden Bäume oder Sträucher ausgefahren wird und auf eine Drehwelle (1) aufgewickelt wird, die an einen Antrieb gekoppelt ist, der ihr Wiederaufwickeln gewährleistet, wobei die Plane ein proximales Ende, das an der Drehwelle fixiert ist, und ein distales Ende umfasst, **dadurch gekennzeichnet, dass** das Abwickeln der Plane mithilfe von mindestens einem und vorzugsweise einer Vielzahl von Bädern (5) erreicht wird, die mit einem Biegungs- und Formgedächtnisvermögen ausgestattet sind, auf einer oder mehreren Wickeltrommeln (6) mit einer Rotationsachse (7A, 7B) aufgewickelt sind, die zu der Rotationsachse (1A) der Wickelwelle (1) der Plane (18) parallel oder im Wesentlichen parallel ist, und deren distales Ende mit dem distalen Ende der Plane verbunden ist, wobei der abgewickelte Teil (5') der Bänder (5) je nach ihrer Abwicklung automatisch eine gerade Form und eine Steifigkeiteigenschaft annimmt, dank der ihr distales Ende das Ausüben eines Drucks auf das distale Ende der Plane und das 'Verschieben des distalen Endes in Richtung der Außenseite der Trägerstruktur (14) ermöglicht, wobei das Ausfahren der Plane ermöglicht wird.

2. Verfahren nach Anspruch 1, **dadurch gekennzeichnet, dass** das Abwickeln der Plane (18) durch das motorisierte Abwickeln der Bänder (5) erreicht wird, wobei die Wickelwelle (1) der Plane an einen Antrieb gekoppelt ist, der während der Abwickelphase eine Bremswirkung ausübt, wohingegen das erneute Aufwickeln oder Einziehen der Plane durch den Antrieb umgesetzt wird, der an die Wickelwelle der Plane gekoppelt ist, wobei die Wickeltrommel(n) (6) der Bänder (5) an Antriebsmittel gekoppelt ist bzw. sind, die das Aufwickeln der Bänder gleichzeitig mit der Aufwickelphase der Plane ermöglichen.

3. Vorrichtung zum Sammeln von kleinen Früchten, die von Obstbäumen oder -sträuchern abgerissen wurden, umfassend eine Plane (18), die durch ein distales Ende und eine proximales Ende begrenzt ist, das an einer Wickelwelle (1) fixiert ist, die von einer Trägerstruktur (14) getragen wird und an einen drehenden Antriebsmotor gekoppelt ist, wobei die Vorrichtung außerdem Mittel zum Ausfahren und Einziehen der Plane umfasst, **dadurch gekennzeichnet, dass** die Mittel zum Ausfahren und Einziehen mindestens ein und vorzugsweise eine Vielzahl von Bändern (5) umfassen, die mit einem Biegungs- und Formgedächtnisvermögen ausgestattet sind, wobei ein Ende davor mit einer Wickeltrommel (6) verbunden ist, die ebenfalls von der Trägerstruktur (14) getragen wird und eine Achse (7A, 7B) aufweist, die zu der Rotationsachse (1A) der Wickelwelle (1) der Plane (18) parallel angeordnet ist und worauf die Bänder (5) spiralförmig aufgewickelt sind, und wobei das andere Ende davon mit dem distalen Ende der Plane verbunden ist, sodass bei ihrem Abwickeln der ausgefahrene Teil (5') der Bänder (5) spontan eine gerade Gestaltung annimmt, die mit einer Steifigkeit ausgestattet ist und es ihr distales Ende ermöglicht, den distalen Rand der Plane (18) wegzudrücken, wobei sie von ihrer Wickelwelle (1) entfernt wird und folglich ihr Ausfahren auf dem Boden umgesetzt wird.

4. Vorrichtung nach Anspruch 3, **dadurch gekennzeichnet, dass** das distale Ende des Bands oder der Bänder (5) mit dem distalen Ende der Plane (18) durch ein oder mehrere Schlepperchassis (2, 2a, 2b) verbunden ist.

5. Vorrichtung nach einem der Ansprüche 3 oder 4, **dadurch gekennzeichnet, dass** die Plane (18) einen mittleren Schlitz (F) umfasst, der sich von ihrem distalen Ende erstreckt und in eine Öffnung (C) mündet, die sich im Zentrum der Plane befindet.

6. Vorrichtung nach einem der Ansprüche 4 oder 5, **dadurch gekennzeichnet**, das die Achsen (7A, 7B) der wickeltrommeln (6) der Bänder (5), die mit den Schlepperchassis (2a, 2b) verbunden sind, die am distalen Ende von jedem der zwei Teile (18a, 18b) der Plane vorgesehen sind, auf der horizontalen Ebene leicht verschoben sind, um an die Schlepperchassis eine Trajektorie (Tra, Trb) zu kommunizieren, die anstrebt, die Ränder, die den Schlitz (F) begrenzen, zum Abwickeln der Plane anzunähern, um den Schlitz der Plane nach dem Durchgang des Stamms des abzuerntenden Baumes wieder zu verschließen und eine Dichtheit um die zentrale Öffnung (C) und zwischen den Rändern der Teile (18a, 18b) zu erreichen, die durch den mittleren Schlitz (F) begrenzt sind.

7. Vorrichtung nach einem der Ansprüche 4 bis 6, **dadurch gekennzeichnet, dass** das Schlepperchassis (2) oder jedes Schlepperchassis (2a, 2b) mit Mitteln ausgestattet ist, die seine bzw. ihre Fortbewegung auf dem Boden ermöglichen, wobei die Mittel aus Rändern (3) oder Kufen (4) bestehen.

8. Vorrichtung nach einem der Ansprüche 3 bis 7, **dadurch gekennzeichnet, dass** die Wickeltrommel(n) (6) an Antriebsmittel gekoppelt sind, die das Aufwickeln der Bänder (5) ermöglichen.

9. Vorrichtung nach einem der Ansprüche 3 bis 8, **dadurch gekennzeichnet, dass** sie Mittel umfasst, die das Beibehalten einer leichten Spannung der Plane während der Phasen ihres Abwickelns und Aufwickelns ermöglichen.

10. Vorrichtung nach Anspruch 9, **dadurch gekennzeichnet, dass** die Mittel, die das Beibehalten einer leichten Spannung der Plane (18) ermöglichten, aus Antriebsmitteln bestehen, die an die Wickelwelle (1) der Plane gekoppelt sind, die mit den Antriebsmitteln zum Abwickeln der Bänder (5) gesteuert werden, die auf das oder die Schlepperchassis (2, 2a, 2b) einwirken und das Steuern der Aufwickelphase der Plane (18) ermöglichen, indem die Antriebsmittel zum Aufwickeln der Bänder (5) geregelt werden und während der Phase zum Abwickeln der Plane durch die Antriebsmittel zum Abwickeln des Bands geregelt werden können.

11. Vorrichtung nach einem der Ansprüche 3 bis 10, **dadurch gekennzeichnet, dass** die Mittel zum Abwickeln der Bänder aus Paaren von gegenläufigen Führungsrollen (8a, 8b) bestehen, die in der Nähe der Wickeltrommel (6) angeordnet sind und zwischen denen die Bänder (5) eingebunden sind, die durch Reibung von den Paaren von Rollen angetrieben werden.

12. Vorrichtung nach Anspruch 11, **dadurch gekennzeichnet, dass** die Umrisse der Rollen von jedem Paar von gegenläufigen Führungsrollen (8a, 8b) zusammenwirkende Profile darstellen, die den Übergang von der flachen Form des Bands im aufgewickelten Zustand zu der gewölbten Form des Bands im abgewickelten Zustand begünstigen.

13. Vorrichtung nach Anspruch 12, **dadurch gekennzeichnet, dass** die obere Rolle (Rolle 8a) ein konkaves Profil aufweist und die untere Rolle (Rolle 8b) ein konvexes Profil aufweist.

14. Vorrichtung nach einem der Ansprüche 3 bis 13, **dadurch gekennzeichnet, dass** jedes Band aus zwei übereinandergelegten Stahlbändern besteht, umfassend ein oberes Stahlband (5a) nach den vorhergehenden Ansprüchen und ein unteres Stahlband (5b), das mit einem Schlepperchassis (2, 2a, 2b) verbunden ist und ebenfalls auf die Wickeltrommel (6) des oberen Stahlbands (5a) aufgewickelt wird.

15. Vorrichtung nach Anspruch 14, **dadurch gekennzeichnet, dass** sie mindestens eine Rolle (11) mit einer Achse (11') umfasst, die zu der Achse (7A, 7B) der Trommeln (6) parallel ist und die in der Nähe der Achse der Trommeln (6) und vor den Führungsrollen (8a, 8b) angeordnet ist, was die Richtung des Abwickelns der Bänder (5) anbelangt, wobei die Rolle (11) das Führen des unteren Bands (5b) ermöglicht und verhindert, dass das untere Band mit der unteren Führungsrolle (8b) des oberen Bands (5a) interagieren kann.

16. Vorrichtung nach einem der Ansprüche 14 oder 15, **dadurch gekennzeichnet, dass** jedes untere Stahlband (5b) durch ein elastisches Organ (10) mit einem Schlepperchassis (2, 2a, 2b) verbunden ist, um dimensionale Verzerrungen aufgrund des übereinandergelagerten Aufwickelns der zwei flexiblen Stahlbänder zu kompensieren.

17. Vorrichtung nach einem der Ansprüche 3 bis 16, **dadurch gekennzeichnet, dass** jedes starre und flexible Band (5a, 5b) aus einem metallischen Stahlband besteht, das zum Beispiel aus Stahl, Titan, Messing und vorzugsweise aus Edelstahl mit einer Federwirkung oder einem Formgedächtnis hergestellt wird.

18. Vorrichtung nach einem der Ansprüche 3 bis 16, **dadurch gekennzeichnet, dass** jedes starre und flexible Band (5a, 5b) aus einem metallischen Stahlband mit einer zuvor in seiner konkaven Form durch Biegung oder Profilierung vorgeformten Federwirkung besteht.

19. Vorrichtung nach einem der Ansprüche 3 bis 16, **dadurch gekennzeichnet, dass** jedes starre und flexible Band (5a, 5b) aus einem konkaven pultrudierten Stahlband aus einem Verbundmaterial besteht, umfassend Fasern, wie etwa aus Glas, Kohlenstoff, Kevlar^{®} oder einer Mischung dieser Art von Fasern.

20. Erntemaschine für kleine Früchte, **dadurch gekennzeichnet, dass** sie eine Vorrichtung zum Sammeln nach einem der Ansprüche 3 bis 19 umfasst.

## Claims

1. A process for gathering small fruits detached from fruit trees or bushes by means of a flexible sheeting (18) which is deployed above the ground under the fruit-bearing branches of said trees or bushes to be harvested and which Is wound on to a rotary shaft (1) coupled to a motor means providing for rewinding thereof, the sheeting comprising a proximal end fixed to the rotary shaft and a distal end, **characterised in that** deployment of the sheeting is achieved by means of at least one and preferably a plurality of bands (5) having a flexing and shape memory capacity which are wound around one or more winding drums (6) having an axis of rotation (7A, 7B) parallel or substantially parallel to the axis of rotation (1A) of the winding shaft (1) of the sheeting (18) and the distal end of which is connected to the distal end of said sheeting, the unwound part (5') of the bands (5) automatically acquiring as unwinding thereof progresses a rectilinear shape and a rigidity property, by virtue of which their distal end makes it possible to exert a thrust force on the distal end of the sheeting and to displace said distal end in the direction of the exterior of the carrying structure (14) ensuring deployment of said sheeting.

2. A process according to claim 1 **characterised in that** unwinding of the sheeting (18) is achieved by motor-driven unwinding of the bands (5), the winding shaft (1) of the sheeting being coupled to a motor means exerting a braking action during said unwinding phase while rewinding or retraction of the sleeting is implemented by said motor means coupled to the winding shaft of said sheeting, the winding drum or drums (6) of the bands (5) being coupled to drive means ensuring winding of the bands simultaneously with the phase of winding the sheeting.

3. An arrangement for gathering small fruits detached from fruit trees or bushes comprising a sheeting (18) delimited by a distal end and a proximal end which Is fixed on a winding shaft (1) supported by a carrying structure (14) and coupled to a rotary drive motor, said arrangement further comprising means for deployment and retraction of said sheeting, **characterised in that** said deployment and retraction means comprise at least one and preferably a plurality of bands (5) having a flexing and shape memory capacity, of which an end is connected to a winding drum (6) also supported by the carrying structure (14) and having an axis (7A, 7B) disposed parallel to the axis of rotation (1A) of the winding shaft (1) of the sheeting (18) and on which said bands (5) are wound In a spiral and the other end of which Is connected to the distal end of said sheeting such that upon unwinding thereof the deployed portion (5') of the bands (5) spontaneously assumes a rectilinear configuration enjoying rigidity and that their distal end makes it possible to push the distal edge of the sheeting (18) moving it away from Its winding shaft (1) and consequently implements deployment of the latter above the ground.

4. An arrangement according to claim 3 **characterised in that** the distal end of the band or bands (5) is connected to the distal end of the sheeting (18) by way of one or more tractor frames (2, 2a, 2b).

5. An arrangement according to any one of claims 3 and 4 **characterised in that** the sheeting (18) comprises a central slit (F) which extends from its distal end and ends in an opening (C) at the centre of said sheeting.

6. An arrangement according to any one of claims 4 and 5 **characterised In that** the axes (7A, 7B) of the winding drums (6) of the bands (5) that are connected to the tractor frames (2a, 2b) equipping the distal end of each of the two portions (18a, 18b) of the sheeting are very slightly misaligned in the horizontal plane so as to communicate to the tractor frames a trajectory (Tra, Trb) tending to move the edges delimiting the slit (F) towards each other at the end of unwinding of the sheeting so as to close the slit in the sheeting again after passing the trunk of the tree to be harvested, and to achieve a seal around the central opening (C) and between the edges of the portions (18a, 18b) delimited by said central slit (F).

7. An arrangement according to any one of claims 4 to 6 **characterised In that** the tractor frame (2) or each tractor frame (2a, 2b) Is provided with means permitting movement thereof over the ground, said means being formed by wheels (3) or by skids (4).

8. An arrangement according to any one of claims 3 to 7 **characterised In that** the winding drum or drums (6) are coupled to drive means for winding the bands (5).

9. An arrangement according to any one of claims 3 to 8 **characterised in that** it comprises means making it possible to maintain a slight tension in the sheeting during the phases of unwinding and winding the latter.

10. An arrangement according to claim 9 **characterised in that** the means permitting a light tension to be maintained in the sheeting (18) comprise drive means coupled to the winding shaft (1) of the sheeting and slaved with the drive means for unwinding of the bands (5) acting on the tractor frame or frames (2, 2a, 2b) and making it possible to provide for pilot control of the phase of winding of the sheeting (18) by regulating the drive means for winding the bands (5) and to be regulated by the drive means for unwinding of the band in the sheeting unwinding phase.

11. An arrangement according to any one of claims 3 to 10 **characterised in that** the means for unwinding the bands are formed by pairs of contrarotating guide rollers (8a, 8b) disposed in the proximity of the winding drums (6) and between which are engaged said bands (5) which are driven by friction by said pairs of rollers.

12. An arrangement according to claim 11 **characterised in that** the peripheries of the rollers of each pair of contrarotating guide rollers (8a, 8b) have cooperating profiles promoting the transformation of the band from the flat shape of the band in the wound state to the curved shape of the band in the unwound state.

13. An arrangement according to claim 12 **characterised in that** the upper roller (roller 8a) has a concave profile and the lower roller (roller 8b) has a convex profile.

14. An arrangement according to any one of claims 3 to 13 **characterised in that** each band is formed by two superposed strips comprising an upper strip (5a) according to the preceding claims and a lower strip (5) connected to a tractor frame (2, 2a, 2b) and also wound around the winding drum (6) of the upper strip (5a).

15. An arrangement according to claim 14 **characterised In that** It comprises at least one roller (11) with Its axis (11') parallel to the axis (7A, 7B) of the drums (6) and disposed in the proximity of the axis of the drums (6) and upstream of the guide rollers (8a, 8b), in relation to the direction of unwinding of the bands (5), said roller (11) permitting guidance of the lower band (5b) and preventing the lower band from being capable of interacting with the lower guide roller (8b) of the upper band (5a).

16. An arrangement according to any one of claims 14 and 15 **characterised in that** each lower strip (5b) is connected to a tractor frame (2, 2a, 2b) by way of an elastic member (10) to compensate for the dimensional distortions due to the superposed winding of the two flexible strips.

17. An arrangement according to any one of claims 3 to 16 **characterised in that** each rigid flexible band (5a, 5b) is formed by a metal strip for example of steel, titanlum, brass and preferably stainless steel with a spring effect or a shape memory.

18. An arrangement according to any one of claims 3 to 16 **characterised in that** each rigid flexible band (5a, 5b) is formed by a metal strip with a spring effect which is previously preshaped In Its convex shape by bending or profling.

19. An arrangement according to any one of claims 3 to 16 **characterised in that** each rigid flexible band (5a, 5b) is formed by a pultruded concave strip of composite material comprising fibres such as glass, carbon, kevlar^{®} or a mixture of that type of fibres.

20. A machine for gathering small fruits **characterised in that** It comprises a gathering arrangement according to any one of claims 3 to 19.
